# EUROPEAN PATENT APPLICATION

(11) **EP 2 980 743 A1**
(43) Date of publication of application: **03.02.2016**
(21) Application number: 14306233.9
(22) Date of filing: 01.08.2014
(51) Int. Cl.: G06Q 20/34, G06Q 20/38, G07F 7/12, G07F 7/10

(54) **Control method for controlling an integrated circuit card**

(71) Applicant: Gemalto SA, 92190 Meudon (FR)
(72) Inventor: Faher, Mourad, 92190 MEUDON (FR); Berges, William, 92190 MEUDON (FR)
(74) Representative: Lotaut, Yacine Diaw

(57) **Abstract**

The present invention relates to a control method (MTH) for controlling an integrated circuit card (ICC) by means of a control terminal (CO_T), wherein said integrated circuit card (ICC) comprising:
- a reference cryptographic object (Cco);
- security attributes (SECa) associated to said reference cryptographic object (Cco) comprising a reference validity period (Tr);
- data (D);

said control method (MTH) comprising:
- the checking by the integrated circuit card (ICC) of said reference validity period (Tr) against a reference timestamp (Dr) ;
- if said reference timestamp (Dr) is within said reference validity period (Tr), the checking of a terminal's cryptographic object (Cto) against said reference cryptographic object (Cco) ;
- if said terminal's cryptographic object (Cto) is valid with respect to said reference cryptographic object (Cco), the grant access by the integrated circuit card (ICC) to said data (D) for the control terminal (CO_T) and the control of said data (D) by said control terminal (CO_T) via a secured communication link established with said integrated circuit card (ICC).

## Description

### TECHNICAL FIELD

The present invention relates to a control method for controlling an integrated circuit card by means of a control terminal. The invention also relates to an associated control system.

Such a control method may be used in a non-limitative example for controlling public data of a contactless integrated circuit card.

### BACKGROUND OF THE INVENTION

A control method for controlling an integrated circuit card by means of a control terminal comprises in particular the control of public data of said integrated circuit card. Said public data are publicly accessible in the case of a contact integrated circuit card, but are not accessible in the case of a contactless integrated circuit card. Indeed in this case, firewalls are set-up which prevent access to said public data unless a personal cryptographic object such as a user PIN "Personal Identity Number" is entered for example, said user PIN being known only by the end-user of said contactless integrated circuit card. The control method according to a known prior art uses the end-user's personal cryptographic object to perform the quality control before the delivery to the end-user, but afterwards the end-user has to modify its personal cryptographic object.

A problem is therefore how to perform a quality control of a contactless integrated circuit card without breaking the privacy of the end-user's cryptographic object, that is to say without sharing said end-user's cryptographic object.

### SUMMARY OF THE INVENTION

It is an object of the invention to provide a control method for controlling an integrated circuit card by means of a control terminal which permits to perform quality control of some data of said integrated circuit card with respect to the privacy of an end-user's cryptographic object.

To this end, there is provided a control method for controlling an integrated circuit card by means of a control terminal wherein said integrated circuit card comprising:
- a reference cryptographic object;
- security attributes associated to said reference cryptographic object comprising a reference validity period;
- data;
   said control method comprising:
- the checking by the integrated circuit card of said reference validity period against a reference timestamp;
- if said reference timestamp is within said reference validity period, the checking of a terminal's cryptographic object against said reference cryptographic object;
- if said terminal's cryptographic object is valid with respect to said reference cryptographic object, the grant access by the integrated circuit card to said data for the control terminal and the control of said data by said control terminal via a secured communication link established with said integrated circuit card.

As we will see in further details, due to the specific reference cryptographic object which is provided for the control of data of said integrated circuit card and due to its associated reference validity period, privacy of the end-user cryptographic object is preserved and the specific reference cryptographic object is temporary so that after the delivery of the integrated circuit card to said end-user, it may not be used anymore.

According to non-limitative embodiments of the invention, the control method in accordance with the invention further comprises the following characteristics.

In a first non-limitative embodiment, the checking of the terminal's cryptographic object is performed by the transmission of secret data by said control terminal to said integrated circuit card and by the verification of said secret data by said integrated circuit card, said secret data being based on said terminal's cryptographic object.

In a second non-limitative embodiment, the control method further comprises the transmission of the terminal's cryptographic object by the control terminal to the integrated circuit card, the checking of the terminal's cryptographic object being performed by the comparison between said terminal's cryptographic object and said reference cryptographic object by said integrated circuit card.

In a non-limitative embodiment, the security attributes further comprises a reference role and said control method further comprises:
- the transmission by the control terminal to said integrated circuit card of a terminal's role by means of a certificate;
- the checking of said certificate by said integrated circuit card;
- the checking by the integrated circuit card of said terminal's role sent by the control terminal against the reference role before the checking of the terminal's cryptographic object.

In a non-limitative embodiment, said control method further comprises the checking by the integrated circuit card of a terminal validity period sent by the control terminal by means of said certificate against the reference validity period.

In a non-limitative embodiment, said control method further comprises:
- the transmission by the control terminal to said integrated circuit card of said reference timestamp by means of a certificate;
- the checking of said certificate by said integrated circuit card.

In another non-limitative embodiment, said integrated circuit card comprises said reference timestamp.

In a non-limitative embodiment, said control method further comprises:
- the transmission of a challenge by said integrated circuit card to said control terminal;
- the transmission of a signed response by said control terminal to said integrated circuit card upon reception of said challenge;
- the checking of said signed response by said integrated circuit card.

In a non-limitative embodiment, a reference cryptographic object and a terminal's cryptographic object are a pincode, or a private key, or a biometric object.

In addition, there is provided a control system for controlling an integrated circuit card by means of a control terminal, said control system comprising said integrated circuit card and said control terminal, wherein said integrated circuit card comprises:
- a reference cryptographic object;
- security attributes associated to said reference cryptographic object comprising a reference validity period; and
- data;
   said integrated circuit card being adapted to:
- check said reference validity period against a reference timestamp;
- if said reference timestamp is within said reference validity period, check a terminal's cryptographic object against said reference cryptographic object;
- if said terminal's cryptographic object is valid with respect to said reference cryptographic object, grant access to said data for the control terminal;
   said control terminal being adapted to:
- if said terminal's cryptographic object is valid with respect to said reference cryptographic object, control said data via a secured communication link established with said integrated circuit card.

In addition, there is provided an integrated circuit card comprising:
- a reference cryptographic object;
- security attributes associated to said reference cryptographic object comprising a reference validity period;
- data;
   said integrated circuit card being adapted to:
- check said reference validity period against a reference timestamp;
- if said reference timestamp is within said reference validity period, check a terminal's cryptographic object against said reference cryptographic object;
- if said terminal's cryptographic object is valid with respect to said reference cryptographic object, grant access to said data for the control terminal.

In a non-limitative embodiment, the checking of the terminal's cryptographic object is performed by the transmission of secret data by said control terminal to said integrated circuit card and by the verification of said secret data by said integrated circuit card, said secret data being based on said terminal's cryptographic object.

In another non-limitative embodiment, the checking of the terminal's cryptographic object is performed by the comparison by said integrated circuit card between the terminal's cryptographic object sent by the control terminal and said reference cryptographic object.

In a non-limitative embodiment, the security attributes further comprises a reference role and said integrated circuit card is further adapted to:
- receive a terminal's role sent by the control terminal by means of a certificate;
- check said certificate;
- check said terminal's role sent by the control terminal against the reference role before the checking of the terminal's cryptographic object.

In addition, there is provided a control terminal for controlling an integrated circuit card, said integrated circuit card comprising:
- a reference cryptographic object;
- security attributes associated to said reference cryptographic object comprising a reference validity period; and
- data;
   said control terminal comprising a terminal's cryptographic object, said control terminal being adapted to:
- if its terminal's cryptographic object is valid with respect to said reference cryptographic object, control said data via a secured communication link established with said integrated circuit card.

In a non-limitative embodiment, said control terminal is further adapted to transmit a terminal's role by means of a certificate.

### BRIEF DESCRIPTION OF THE FIGURES

Some embodiments of methods and/or apparatus in accordance with embodiments of the present invention are now described, by way of example only, and with reference to the accompanying drawings, in which:
- Fig.1 illustrates schematically a control system which is adapted to carry out the control method according to a non-limitative embodiment of the invention, said control system comprising an integrated circuit card and a control terminal;
- Fig.2 illustrates schematically a control method according to a first non-limitative embodiment of the invention;
- Fig. 3 illustrates the control method of Fig. 2, said control method comprising further non-limitative steps;
- Fig. 4 is a sequence diagram of the control method of Fig. 3 comprising further non-limitative steps;
- Fig. 5 illustrates schematically a control method according to a second non-limitative embodiment of the invention;
- Fig. 6 illustrates the integrated circuit card of Fig. 2 and its functions; and
- Fig. 7 illustrates schematically the control terminal of Fig. 2 and its functions.

### DESCRIPTION OF EMBODIMENTS OF THE INVENTION

In the following description, well-known functions or constructions by the man skilled in the art are not described in detail since they would obscure the invention in unnecessary detail.

The present invention relates to a control method MTH for controlling an integrated circuit card ICC by means of a control terminal CO_T.

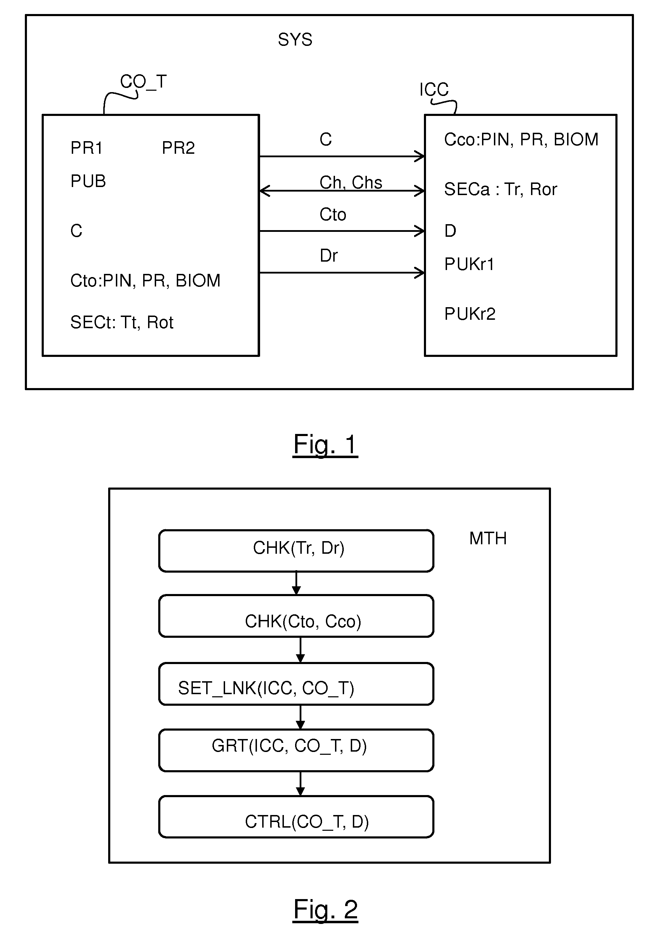

It is carried out by a control system SYS, illustrated in Fig. 1, comprising an integrated circuit card ICC and a control terminal CO_T.

In the following, the integrated circuit card ICC will be also called ICC card.

As illustrated in Fig. 1, the control terminal CO_T comprises:
- a terminal's cryptographic object Cto.

In non-limitative embodiments, the terminal's cryptographic object Cto is a pincode PIN, or a private key PR, or a biometric object BIOM.

The control terminal CO_T further comprises:
- a first private key PR1;
- a public key PUB.

In a non-limitative embodiment, the control terminal CO_T further comprises security attributes SECt associated to said terminal's cryptographic object Cto comprising:
- a terminal validity period Tt; and
- a terminal role Rot.

As illustrated in Fig. 1, the integrated circuit card ICC comprises:
- a reference cryptographic object Cco;
- security attributes SECa associated to said reference cryptographic object Cco comprising a reference validity period Tr; and
- data D.

In a non-limitative embodiment, said integrated circuit card ICC is a smart card. In non-limitative examples, said smart card is an Electronic Identity Card, a health card, a driving license, a payment card etc.

In non-limitative embodiments, the reference cryptographic object Cco is a pincode PIN, or a private key PR, or a biometric object BIOM.

It is to be noted that the reference validity period Tr defines the validity period for said reference cryptographic object Cco. Hence, the reference validity period Tr comprises a first date Tr1 from which the reference cryptographic object Cco is valid, and a second date Tr2 beyond which the reference cryptographic object Cco is not valid anymore. The first date Tr1 is therefore earlier than the second date Tr2.

The data D are data which may be controlled during a control process (also called validation process or quality control process).

In a first non-limitative embodiment, said data D comprise public data Dpu. Said public data Dpu may be read by any terminal which are authenticated by said integrated circuit card ICC.

In a second non-limitative embodiment, said data D comprise protected data Dpp. Said protected data Dpp may be read by any terminal which are authenticated and entitled to access these data Dpp, that is to say which has the right role to access these data Dpp.

It is to be noted that in another non-limitative embodiment, said data D may comprise public data Dpu and protected data Dpp.

It is to be noted that the reference cryptographic object Cco and its security attributes SECa are stored in said integrated circuit card ICC during a phase of customization before being dispatched to the end-user. Said reference cryptographic object Cco and security attributes SECa are defined by a trusted authority.

In a non-limitative embodiment, the security attributes SECa further comprises a reference role Ror. The reference role Ror defines the rights of a control terminal CO_T to access the data D of said integrated circuit card ICC via said reference cryptographic object Cco.

The control method MTH is illustrated in Fig. 2 in a non-limitative embodiment.

It comprises:
- the checking by the integrated circuit card ICC of said reference validity period Tr against a reference timestamp Dr (illustrated CHK(Tr, Dr));
- if said reference timestamp Dr is within said reference validity period Tr, the checking of a terminal's cryptographic object Cto against said reference cryptographic object Cco (illustrated CHK(Cto, Cco));
- if said terminal's cryptographic object Cto is valid with respect to said reference cryptographic object Cco, the grant access by the integrated circuit card ICC to said data D for the control terminal CO_T (illustrated GRT(ICC, CO_T, D)) and the control of said data D by said control terminal CO_T via a secured communication link established with said integrated circuit card ICC (illustrated CTRL(CO_T, D)).

The control method further comprises the establishment of a secure communication link between the ICC card and the control terminal CO_T (illustrated SET_LNK(ICC, CO_T).

It is to be noted that the reference timestamp Tr is the precise date, or date and time, of the day.

### First embodiment

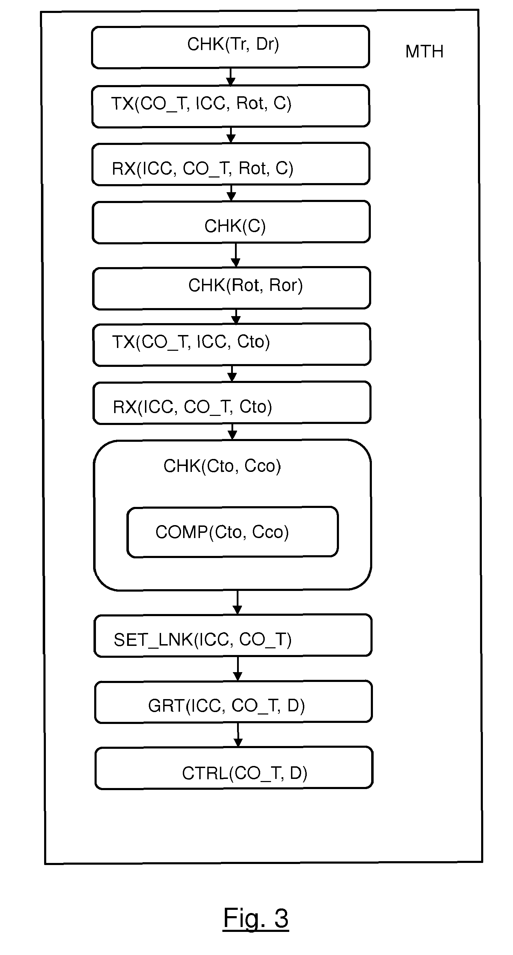

Fig. 3 illustrates a first non-limitative embodiment of said control method MTH.

According to said embodiment, the control method MTH further comprises:
- the transmission by the control terminal CO_T to said integrated circuit card ICC of a terminal's role Rot by means of a certificate C (illustrated TX(CO_T, ICC, Rot, C) and the reception of said certificate C comprising said terminal's role Rot by said ICC card (illustrated RX(ICC, CO_T, Rot, C);
- the checking of said certificate C by said integrated circuit card ICC (illustrated CHK(C));
- the checking by the integrated circuit card ICC of said terminal's role Rot sent by the control terminal CO_T against the reference role Ror (illustrated CHK(Rot, Ror)) before the checking of the terminal's cryptographic object Cto.

In this embodiment, the control method MTH further comprises:
- the transmission of said terminal's cryptographic object Cto by said control terminal CO_T to said ICC card (illustrated TX(CO_T, ICC, Cto);
- the reception by said ICC card of said terminal's cryptographic object Cto sent by said control terminal CO_T (illustrated RX(ICC, CO_T, Cto).

In this case, the checking of the terminal's cryptographic object Cto is performed by the comparison between said terminal's cryptographic object Cto and said reference cryptographic object Cco (illustrated COMP(Cto, Cco).

It is to be noted that the checking of the reference validity period Tr and of the terminal's role Rot may be performed in any order. Hence, the role Rot may be checked before the reference validity period Tr.

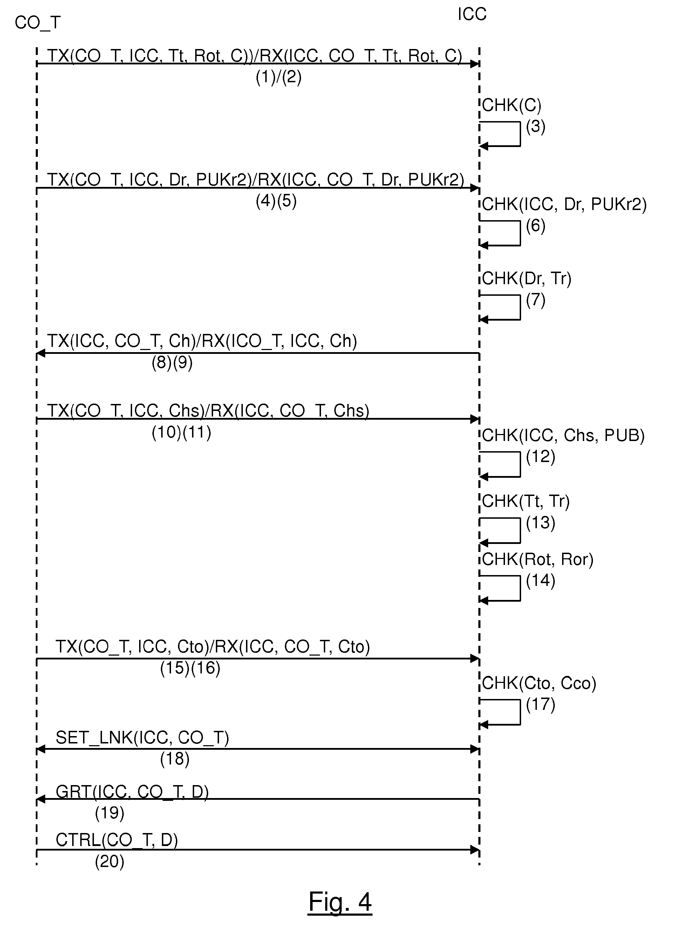

In a non-limitative embodiment, the control method MTH further comprises the checking by the integrated circuit card ICC of a terminal validity period Tt sent by the control terminal CO_T by means of said certificate C against the reference validity period Tr (illustrated CHK(Tt, Tr) in Fig. 4). Therefore, the control method MTH further comprises the transmission of said terminal validity period Tt by said control terminal CO_T to said ICC card by means of said certificate C (illustrated TX(CO_T, ICC, Rot, Tt, C), and the reception by said ICC card of said terminal validity period Tt sent by said control terminal CO_T by means of said certificate C (illustrated RX(ICC, CO_T, Rot, Tt, C).

It is to be noted that the checking of the terminal validity period Tt and of the terminal's role Rot may be performed in any order. Hence, the role Rot may be checked before the validity period Tt.

In a first non-limitative variant, the terminal's validity period Tt sent by the control terminal CO_T is the reference timestamp Tr. Therefore, when a certificate C is used, said certificate C comprises said reference timestamp Dr. In this case, the certificate C is to be published by the trusted third party the same day of use of said certificate C. It means that the certificate C is valid only at this date Tr. In this case, it is to be noted that the step checking the reference validity period Tr against the reference timestamp Dr (CHK(Tr, Dr) is the same than the step checking the terminal validity period Tt against said reference validity period Tr (CHK(Tt, Tr)).

In a second non-limitative embodiment, the terminal's validity period Tt sent by the control terminal CO_T comprises two dates Tr1-Tr2. Within these two dates, the certificate C is valid. Outside, it is invalid. This means that within these two dates, the terminal's cryptographic object Cto is valid. It may be used for the validation process of an ICC card. It is to be noted that the first date Tt1 is earlier than the second date Tt2.

It is to be noted that the certificate C permits the integrated circuit card ICC to be sure that a control terminal CO_T which accesses it is a control terminal certified by a trusted third party. Said trusted third party has to publish a certificate for each terminal involved in the control process, and to provide each terminal a corresponding private key PR1.

To this end, in a non-limitative embodiment, the integrated circuit card ICC further comprises a first root public key PUKr1 which permits the checking of said certificate C. The checking of the certificate C is performed before the checking of said terminal validity period Tt and of said terminal's role Rot.

It is to be noted that the certificate C further comprises a public key PUB.

In order for the ICC card to verify that the control terminal CO_T owns a first terminal private key PR1 which corresponds to said public key PUB, in a non-limitative embodiment, the control method further comprises:
- the transmission of a challenge Ch by said integrated circuit card ICC to said control terminal CO_T (illustrated TX(ICC, CO_T, Ch) in Fig.4);
- the transmission of a signed response Chs by said control terminal CO_T to said integrated circuit card ICC (illustrated TX(CO_T, ICC, Chs) in Fig.4) upon reception of said challenge Ch (illustrated RX(CO_T, ICC, Ch) in Fig.4);
- the checking of said signed response Chs by said integrated circuit card ICC (illustrated CHK(ICC, Chs, PUB) in Fig.4).

Said challenge-response procedure being well-known by the man skilled in the art, it won't be further described.

It is to be noted that the transmission and verification of the certificate C and the transmission and verification of the challenge Ch are part of an authentication procedure which is performed by said integrated circuit card ICC to authenticate the control terminal CO_T. It permits to avoid a fake control terminal CO_T to access the integrated circuit card ICC and to read the data D.

It is to be noted that as the quality control of the integrated circuit card ICC is performed before any use of said ICC card by an end-user, and in the premises of a control trusted third party (which performs the validation process), there is no need for the integrated circuit card ICC to be authenticated by the control terminal CO_T as there is no need for the control terminal CO_T to verify if said ICC card is a fake card or not. Of course, one may perform an authentication of the ICC card by said control terminal CO_T if desired.

In a first non-limitative embodiment, if the ICC card has an internal clock, it means that said ICC card comprises said reference timestamp Dr which is the precise date of the day.

In a second non-limitative embodiment, If the ICC card has no internal clock which gives the precise date of the day, in order for the integrated circuit card ICC to know the precise date of the day, two non-limitative variants may be performed. The precise date of the day serves as an external reference timestamp Dr for the ICC card. In this case, the control method MTH further comprises the transmission of a reference timestamp Dr to the integrated circuit card ICC by a terminal which is different from the control terminal CO_T or by the control terminal CO_T itself as described before.

When the reference timestamp Dr is external to the ICC card, in a non-limitative embodiment, the reference timestamp Dr is signed.

As the reference timestamp Dr is signed, the ICC card is sure that the reference timestamp Dr has not been falsified. Hence, it permits to secure the transmission of said reference timestamp Dr.

The reference timestamp Dr will be verified by the integrated circuit card ICC using a second root public key PUKr2. The integrated circuit card ICC is customized with said second root public key PUKr2.

In a first non-limitative variant, the reference timestamp Dr is signed by the trusted authority which provides said reference timestamp Dr. Said trusted authority transmits said reference timestamps Dr by means of one of his terminal.

In a second non limitative variant, the reference timestamp Dr is signed by said control terminal CO_T and said control terminal CO_T transmits said reference timestamp Dr by means of another certificate C'. Said reference timestamp Dr is signed with a second terminal private key PR2 corresponding to the second root public key PUKr2 of the integrated circuit card ICC. In this case, each control terminal CO_T will store its own private key PR2. All the integrated circuit cards ICC which have to be controlled by said control terminals CO_T will own said second root public key PUKr2 corresponding to all the second private keys PR2.

It is to be noted that normally, it won't be the same authority who publishes the certificate C and who provides the reference timestamp Dr. But when it is the same authority, the first root public key PUKr1 and the second root public key PUKr2 may be the same. It may be especially the case when the certificate C comprises said reference timestamp Dr as described before.

The reference timestamp Dr and the certificate C ensures that the certificate

C may not be used outside the reference validity period Tr provided for this purpose, and that it may not be used outside the premises of the control authority (as the private key PR2 is generated by the control authority within its premises).

It ensures that the control terminal CO_T may not read the data of the integrated circuit card ICC outside this reference validity period Tr. It also ensures that the terminal's cryptographic object Cto may still be verified by the ICC card.

The sequence diagram of Fig. 4 illustrates the control method MTH according to the first embodiment with these further steps described above, more particularly with the use of the certificate C, the challenge Ch, the transmission of the reference timestamp Dr by the control terminal CO_T, and the transmission of the terminal validity period Tt by the control terminal CO_T.

In a step 1), the control terminal CO_T sends its certificate C comprising its terminal's validity period Tt and its role Rot to the ICC card which receives it (step 2).

In step 3), the ICC card checks said certificate C using its first root public key PUKr1;

If the certificate C is valid, in a fourth step 4), the control terminal CO_T sends the reference timestamp Dr which is signed with its terminal private key PR2 to the ICC card which receives it (step 5).

In step 6), the ICC card verifies said reference timestamp Dr with its second root public key PUKr2.

In step 7), if Dr is valid, the ICC card compares said reference timestamp Dr with its own reference validity period Tr, that is to say it verifies if it is superior to the low reference date limit Tr1 and inferior to the high reference date limit Tr2.

If it is not the case, the ICC card denies access to its data D to the control terminal CO_T (not illustrated).

If it is the case (step 8), the challenge Ch is sent by the ICC card to the control terminal CO_T (after request) which receives it (step 9).

In step 10), the control terminal signs a response with its terminal private key PR1 (which corresponds to the public key PUB from the certificate C) and sends the signed response Chs to the ICC card which receives it (step 11).

In step 12), the ICC card checks said response Chs with the public key PUB it has retrieved from the certificate C (just after the checking the certificate C).

If the signed response Chs is not right, the ICC card denies access to its data D to the control terminal CO_T (not illustrated). If the signed response Chs is right, the ICC card checks the terminal validity period Tt of the certificate C against its reference validity period Tr (step 13). In this non-limitative example, the terminal validity period Tt comprises two dates Tt1, Tt2. Said terminal validity period Tt is valid if there is at least a partial overlap between the interval Tt1-Tt2 and the interval Tr1-Tr2. In this case, the certificate C is valid (and thus the terminal's cryptographic object may be used).

In step 14) the ICC card checks also the terminal's role Rot of the certificate C against its reference role Rot to verify that the terminal CO_T has the role of quality control : it means that it is authorized to verify the data D.

If one of the terminal validity period Tt or the terminal's role is not right, the ICC card denies access to its data D to the control terminal CO_T (not illustrated).

In step 15), if the terminal validity period Tt and the terminal's role are valid, the control terminal CO_T sends its terminal's cryptographic object Cto to the ICC card which receives it (step 16).

In step 17), the ICC card checks the terminal's cryptographic object Cto against the reference cryptographic object Cco stored in its memory.

If they are different, the ICC card denies access to its data D to the control terminal CO_T (not illustrated).

If they are equal, the ICC card set-up a secure communication link with the control terminal CO_T (step 18) and grants access to its data for the control terminal CO_T (step 19).

In step 20), the control terminal CO_T controls the data D of the ICC card in order to verify if the card has no defects. After this quality control, if the ICC card is valid, the ICC card may be dispatched to the end-user or to the service provider who provides the service corresponding to said ICC card, such as a bank in a non-limitative example.

In a non-limitative embodiment, the secured communication link (also called channel) is performed via a PACE protocol ("Password Authenticated Connection Establishment"), said PACE protocol being used for the checking of the terminal's cryptographic object Cto against the reference cryptographic object Cco.

It is to be noted that each time, the information checked by the ICC card are valid, said ICC card sends an acknowledgement to the control terminal CO_T. It is not illustrated in order to simplify the sequence diagram of Fig. 4.

It is to be noted that in a non-limitative embodiment, in order to preserve security of the data D of said ICC card, the ICC card may be dispatched to the end-user (or to a service provider) only at the end of the reference validity period Tr so that no other terminal's cryptographic object than the end-user's one may be used to access said data D.

This first embodiment permits an asymmetric role authentication as it uses a PKI (Public-Key Infrastructure) mechanism based on public key and on private key.

### Second embodiment

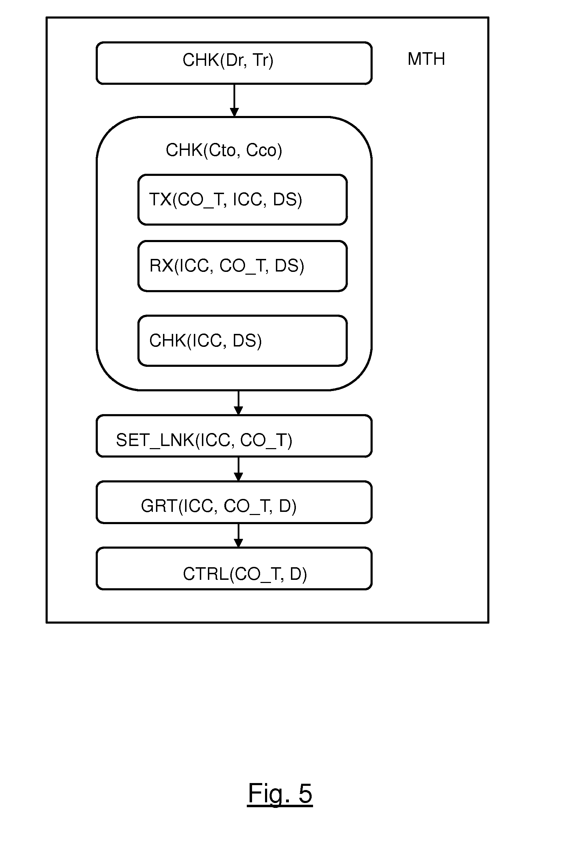

Fig. 5 illustrates a second non-limitative embodiment of said control method MTH.

According to said embodiment, the checking of the terminal's cryptographic object Cto is performed by the transmission of secret data DS by said control terminal CO_T to said integrated circuit card ICC (illustrated TX(CO_T, ICC, DS), RX(ICC, CO_T, DS) and the verification of said secret data DS by said ICC card (CHK(ICC, DS)), said secret data DS being based on said terminal's cryptographic object Cto.

With this secret data DS, the ICC card may verify that the control terminal CO_T has the right terminal's cryptographic object Cto and that is has the right to perform the control of its data D.

The authentication of the control terminal CO_T or the mutual authentication between the control terminal CO_T and the ICC card (described before for the first embodiment) applied in this second embodiment. The same applies for the challenge-response procedure (described before for the first embodiment).

In the example illustrated, there is no terminal role Rot which is transmitted and the ICC card doesn't have a reference role Ror. Moreover, there is no use of a terminal validity period Tt.

In another variant, if desired, a terminal role Rot and/or a terminal validity period Tt may be used as described before in the first embodiment.

This second embodiment permits a symmetric role authentication as it uses a shared secret DS.

Hence, the control method MTH is carried out by the ICC card and the control terminal CO_T.

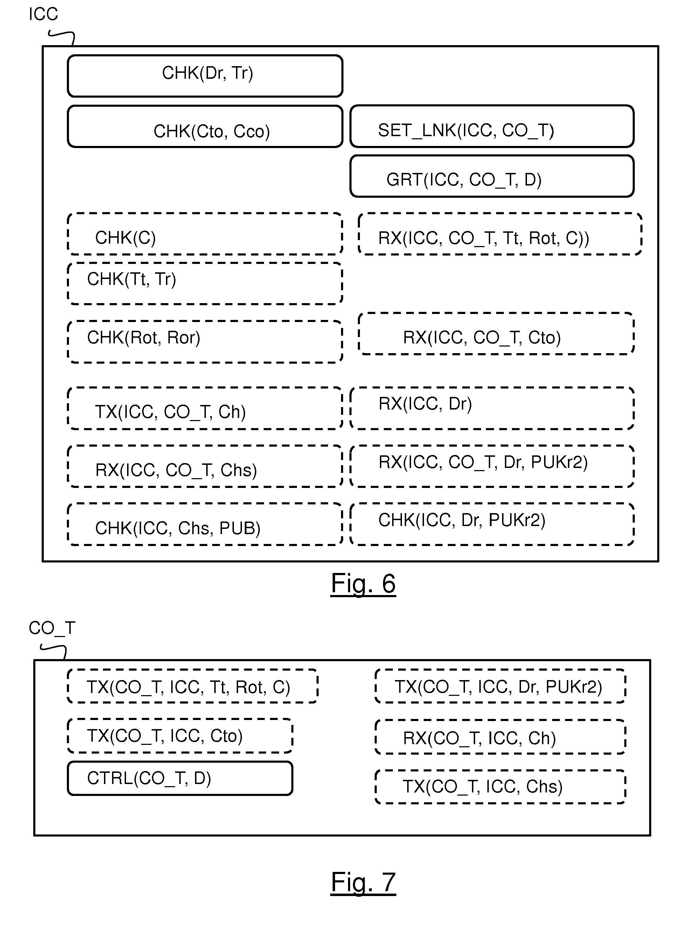

The ICC card is illustrated in Fig. 6. It is adapted to:
- check said reference validity period Tr against a reference timestamp Dr (CHK(Tr, Dr));
- if said reference timestamp Dr is within said reference validity period Tr, check a terminal's cryptographic object Cto against said reference cryptographic object Cco (illustrated CHK(Cto, Cco));
- if said terminal's cryptographic object Cto is valid with respect to said reference cryptographic object Cco, grant access to said data D for the control terminal CO_T (illustrated GRT(ICC, CO_T, D));

The ICC card is further adapted to establish a secured communication link with said control terminal CO_T (illustrated SET_LNK(ICC, CO_T)).

When a terminal's role Rot and a terminal's validity period Tt are used, As illustrated in dotted lines, in non-limitative embodiments, the ICC card is further adapted to:
- receive said terminal's role Rot by means of a certificate C sent by said control terminal CO_T and receive said terminal validity period Tt by means of said certificate C (illustrated RX(ICC, CO_T, Tt, Rot, C));
- check said certificate C (illustrated CHK(C));
- check said terminal's role Rot sent by the control terminal CO_T against the reference role Ror before the checking of the terminal's cryptographic object Cto (illustrated CHK(Rot, Ror)) ;
- check said terminal validity period Tt sent by the control terminal CO_T by means of said certificate C against the reference validity period Tr (illustrated CHK(Tt, Tr));
- receive said terminal's cryptographic object Cto (illustrated RX(ICC, CO_T, Cto)) ;

As illustrated in dotted lines, when a challenge Ch is used, the ICC card is further adapted to:
- transmit a challenge Ch to said control terminal CO_T (illustrated TX(ICC, CO_T, Ch));
- receive a signed response Chs from said control terminal CO_T (illustrated RX(ICC, CO_T, Chs) ;
- check said signed response Chs (illustrated CHK(ICC, Chs, PUB).

As illustrated in dotted lines, in a non-limitative embodiment, when the ICC card doesn't have any internal clock, it is further adapted to:
- receive a reference timestamp Dr (illustrated RX(ICC, Dr));
- verify the reference timestamp Dr when it is signed (illustrated CHK(ICC, Dr, PUKr2)).

In a non-limitative variant, said ICC card is adapted to receive said reference timestamp Dr from said control terminal CO_T (illustrated RX(ICC, CO_T, Dr, PUKr2)).

As illustrated in dotted lines, in a non-limitative embodiment, when the control terminal CO_T sends its terminal's cryptographic object Cto, the ICC card is further adapted to:
- receive said terminal's cryptographic object (illustrated RX(ICC, CO_T, Cto)).

The control terminal CO_T is illustrated in Fig. 7. It is adapted to:
- control said data D via said secured communication link established with said integrated circuit card ICC if said terminal's cryptographic object Cto is valid with respect to said reference cryptographic object Cco (illustrated CTRL(CO_T, D)).

As illustrated in dotted lines, in non-limitative embodiments, the control terminal CO_T is further adapted to:
- transmit to said integrated circuit card ICC said terminal validity period Tt and said terminal role Rot by means of a certificate C (illustrated TX(CO_T, ICC, Tt, Rot, C));
- transmit said terminal's cryptographic object Cto to said integrated circuit card ICC (illustrated TX(CO_T, ICC, Cto)) ;
- transmit a signed response Chs to said integrated circuit card ICC (illustrated TX(CO_T, ICC, Chs)) upon reception of said challenge Ch (illustrated RX(CO_T, ICC, Ch));

As illustrated in dotted lines, in a non-limitative embodiment, when the ICC card doesn't have any internal clock, the control terminal CO_T is further adapted to:
- sign a reference timestamp Dr and transmit said reference timestamp Dr to said integrated circuit card ICC (illustrated TX(CO_T, ICC, Dr, PUKr2)).

It is to be understood that the present invention is not limited to the aforementioned embodiments.

Hence, the sequence of steps illustrated in Fig. 4 is a non-limitative embodiment. In other embodiments, the steps may be performed in other orders. For example, the transmission of the reference timestamp Dr may be performed before the transmission of the certificate C. In this case, the ICC card may check the reference timestamp Dr with respect to the reference validity period Tr as described before. If it is not within said reference validity period Tr, the ICC card may reject the control directly. If the reference timestamp Dr is valid, the ICC card may perform the different steps above-described starting with the reception and verification of the certificate C.

For example, the checking of the terminal's role Rot may be performed before the checking of the terminal validity period Tt etc.

Hence, some embodiments of the invention may comprise one or a plurality of the following advantages:
- it is easy to implement;
- it is secured;
- it solves the problem of accessing data of an ICC card for quality control before said ICC card is used by an end-user, without breaking privacy of the end-user's own cryptographic object;
- it avoids using the end-user's cryptographic object to perform quality control on the ICC card : the end-user doesn't need to modify his cryptographic object after said control. There is no sharing of the end-user's cryptographic object with a control third party ;
- it permits access to public data of a contactless ICC card ;
- it avoids using a temporary administrator cryptographic object which has to be deactivated by using the end-user's cryptographic object.

## Claims

1. Control method (MTH) for controlling an integrated circuit card (ICC) by means of a control terminal (CO_T), wherein said integrated circuit card (ICC) comprising :
- a reference cryptographic object (Cco);
- security attributes (SECa) associated to said reference cryptographic object (Cco) comprising a reference validity period (Tr);
- data (D);
said control method (MTH) comprising:
- the checking by the integrated circuit card (ICC) of said reference validity period (Tr) against a reference timestamp (Dr) ;
- if said reference timestamp (Dr) is within said reference validity period (Tr), the checking of a terminal's cryptographic object (Cto) against said reference cryptographic object (Cco) ;
- if said terminal's cryptographic object (Cto) is valid with respect to said reference cryptographic object (Cco), the grant access by the integrated circuit card (ICC) to said data (D) for the control terminal (CO_T) and the control of said data (D) by said control terminal (CO_T) via a secured communication link established with said integrated circuit card (ICC).

2. Control method (MTH) according to claim 1, wherein the checking of the terminal's cryptographic object (Cto) is performed by the transmission of secret data (DS) by said control terminal (CO_T) to said integrated circuit card (ICC) and by the verification of said secret data (DS) by said integrated circuit card (ICC), said secret data (DS) being based on said terminal's cryptographic object (Cto).

3. Control method (MTH) according to claim 1, wherein the control method (MTH) further comprises the transmission of the terminal's cryptographic object (Cto) by the control terminal (CO_T) to the integrated circuit card (ICC), the checking of the terminal's cryptographic object (Cto) being performed by the comparison between said terminal's cryptographic object (Cto) and said reference cryptographic object (Cco) by said integrated circuit card (ICC).

4. Control method (MTH) according to any one of the previous claims 1 to 3, wherein the security attributes (SECa) further comprises a reference role (Ror) and said control method (MTH) further comprises :
- the transmission by the control terminal (CO_T) to said integrated circuit card (ICC) of a terminal's role (Rot) by means of a certificate (C);
- the checking of said certificate (C) by said integrated circuit card (ICC);
- the checking by the integrated circuit card (ICC) of said terminal's role (Rot) sent by the control terminal (CO_T) against the reference role (Ror) before the checking of the terminal's cryptographic object (Cto).

5. Control method (MTH) according to any one of the previous claims 1 to 4, wherein said control method (MTH) further comprises the checking by the integrated circuit card (ICC) of a terminal validity period (Tt) sent by the control terminal (CO_T) by means of said certificate (C) against the reference validity period (Tr).

6. Control method (MTH) according to any one of the previous claims 1 to 5, wherein said control method (MTH) further comprises :
- the transmission by the control terminal (CO_T) to said integrated circuit card (ICC) of said reference timestamp (Dr) by means of a certificate (C');
- the checking of said certificate (C') by said integrated circuit card (ICC).

7. Control method (MTH) according to any one of the previous claims 1 to 5, wherein said integrated circuit card (ICC) comprises said reference timestamp (Dr).

8. Control method (MTH) according to any one of the previous claims 1 to 7, wherein said control method (MTH) further comprises:
- the transmission of a challenge (Ch) by said integrated circuit card (ICC) to said control terminal (CO_T);
- the transmission of a signed response (Chs) by said control terminal (CO_T) to said integrated circuit card (ICC) upon reception of said challenge (Ch);
- the checking of said signed response (Chs) by said integrated circuit card (ICC).

9. Control method (MTH) according to any one of the previous claims 1 to 8, wherein a reference cryptographic object (Cco) and a terminal's cryptographic object (Cto) are a pincode (PIN), or a private key (PR), or a biometric object (BIOM).

10. Control system (SYS) for controlling an integrated circuit card (ICC) by means of a control terminal (CO_T), said control system (SYS) comprising said integrated circuit card (ICC) and said control terminal (CO_T), wherein said integrated circuit card (ICC) comprises:
- a reference cryptographic object (Cco);
- security attributes (SECa) associated to said reference cryptographic object (Cco) comprising a reference validity period (Tr); and
- data (D);
said integrated circuit card (ICC) being adapted to:
- check said reference validity period (Tr) against a reference timestamp (Dr);
- if said reference timestamp (Dr) is within said reference validity period (Tr), check a terminal's cryptographic object (Cto) against said reference cryptographic object (Cco);
- if said terminal's cryptographic object (Cto) is valid with respect to said reference cryptographic object (Cco), grant access to said data (D) for the control terminal (CO_T);
said control terminal (CO_T) being adapted to:
- if said terminal's cryptographic object (Cto) is valid with respect to said reference cryptographic object (Cco), control said data (D) via a secured communication link established with said integrated circuit card (ICC).

11. Integrated circuit card (ICC) comprising:
- a reference cryptographic object (Cco);
- security attributes (SECa) associated to said reference cryptographic object (Cco) comprising a reference validity period (Tr);
- data (D);
said integrated circuit card (ICC) being adapted to:
- check said reference validity period (Tr) against a reference timestamp (Dr);
- if said reference timestamp (Dr) is within said reference validity period (Tr), check a terminal's cryptographic object (Cto) against said reference cryptographic object (Cco);
- if said terminal's cryptographic object (Cto) is valid with respect to said reference cryptographic object (Cco), grant access to said data (D) for the control terminal (CO_T).

12. Integrated circuit card (ICC) according to claim 11, wherein the checking of the terminal's cryptographic object (Cto) is performed by the transmission of secret data (DS) by said control terminal (CO_T) to said integrated circuit card (ICC) and by the verification of said secret data (DS) by said integrated circuit card (ICC), said secret data (DS) being based on said terminal's cryptographic object (Cto).

13. Integrated circuit card (ICC) according to claim 11, wherein the checking of the terminal's cryptographic object (Cto) is performed by the comparison by said integrated circuit card (ICC) between the terminal's cryptographic object (Cto) sent by the control terminal (CO_T) and said reference cryptographic object (Cco).

14. Integrated circuit card (ICC) according to any one of the previous claims 11 to 13, wherein the security attributes (SECa) further comprises a reference role (Ror) and said integrated circuit card (ICC) is further adapted to:
- receive a terminal's role (Rot) sent by the control terminal (CO_T) by means of a certificate (C);
- check said certificate (C);
- check said terminal's role (Rot) sent by the control terminal (CO_T) against the reference role (Ror) before the checking of the terminal's cryptographic object (Cto).

15. Control terminal (CO_T) for controlling a integrated circuit card (ICC), said integrated circuit card (ICC) comprising:
- a reference cryptographic object (Cco);
- security attributes (SECa) associated to said reference cryptographic object (Cco) comprising a reference validity period (Tr); and
- data (D);
said control terminal (CO_T) comprising a terminal's cryptographic object (Cto), said control terminal (CO_T) being adapted to:
- if its terminal's cryptographic object (Cto) is valid with respect to said reference cryptographic object (Cco), control said data (D) via a secured communication link established with said integrated circuit card (ICC).

16. Control terminal (CO_T) according to claim 15, wherein said control terminal (CO_T) is further adapted to transmit a terminal's role (Rot) by means of a certificate (C).
